# EUROPÄISCHE PATENTSCHRIFT

(11) **EP 1 574 724 B1**
(45) Veröffentlichungstag und Bekanntmachung des Hinweises auf die Patenterteilung: **27.02.2008**
(21) Anmeldenummer: 04005720.0
(22) Anmeldetag: 10.03.2004
(51) Int. Cl.: F15C 5/00

(54) **Pneumatisches Mikroventil**
Pneumatic micro valve
Micro-soupape pneumatique

(43) Veröffentlichungstag der Anmeldung: 14.09.2005
(73) Patentinhaber: Festo AG & Co., 73734 Esslingen (DE)
(72) Erfinder: Muth, Andreas, Dr., 73230 Kirchheim/Teck (DE); Hanisch, Christoph, Dr., 73734 Esslingen (DE)
(74) Vertreter: Bregenzer, Michael

(56) Entgegenhaltungen:
- EP-A- 0 829 649
- US-A- 5 622 611
- US-A- 6 117 396
- US-A- 6 149 123
- US-A1- 2002 117 517
- US-A1- 2002 185 184
- PATENT ABSTRACTS OF JAPAN Bd. 0071, Nr. 63 (M-229), 16. Juli 1983 (1983-07-16) & JP 58 068562 A (SANYO DENKI KK; others: 01), 23. April 1983 (1983-04-23)

## Beschreibung

Die vorliegende Erfindung betrifft ein pneumatisches Mikroventil mit einer Ventilkammeranordnung und mehreren ventilkanälen, über die Druckluft in die Ventilkammeranordnung einströmen und ausströmen kann und von denen mindestens ein Ventilkanal durch die Ventilgliedanordnung verschließbar ist, und mit einem Antrieb für die Ventilgliedanordnung.

Die Ventilgliedanordnung enthält beispielsweise ein blattartiges Ventilglied, das zum Beispiel elektrostatisch oder piezo-elektrisch angetrieben ist. Das Ventilglied weist üblicherweise einen kleinen Betätigungshub auf, beispielweise 10 bis 20 µm. Bei idealen Bedingungen, das heißt bei sauberer Druckluft, reicht die Kraft des Antriebs aus, um mit dem Ventilglied einen oder mehrere Ventilkanäle dicht zu verschließen. In der Praxis jedoch ist die Druckluft häufig verunreinigt oder enthält Additive, die beispielsweise zum Zwecke der Schmierung der Druckluft beigemischt sind. Es kann dann vorkommen, dass das Öl sich in der Ventilkammer festsetzt, beispielsweise in einem Anschlagbereich des Ventilglieds und/oder am Ventilglied. Aufgrund von Kapillarkräften haftet dann das Ventilglied beispielsweise an einer Innenwandfläche der Ventilkammer an. Die Antriebskraft für die Betätigung des Ventilgliedes reicht dann nicht mehr aus, um das Ventilglied zu betätigen. Ferner tritt das Problem auf, dass aufgrund des in der Ventilkammer befindlichen Öles das Ventilglied den oder die Ventilkanäle nicht mehr dicht verschließt. Es treten unerwünschte Leckagen auf.

Ein Mikroventil der eingangs genannten Art mit einem elektrostatischem Antrieb für das Ventilglied ist aus EP 0 829 649 A2 bekannt. Das Ventilglied ist mit einer Beschichtung versehen, die eine mechanische Vorspannung erzeugt.

Mikroventile für die Fluidbeeinflussung korrosiver Fluide sind aus US 6,149,123 bekannt. Eine Teflonbeschichtung, eine Beschichtung mit Chrom, Siliconcarbid oder Siliconnitrid wird als Beschichtung des Mikroventils vorgeschlagen. Das Ventil enthält eine Flüssigkeit zur Betätigung des Ventilglieds, die sich durch Erhitzen ausdehnt.

Es ist daher die Aufgabe der Erfindung, die Zuverlässigkeit eines Mikroventils der eingangs genannten Art zu verbessern, insbesondere die Empfindlichkeit des Mikroventils gegenüber in der Druckluft enthaltenem Öl zu verringern.

Diese Aufgabe wird durch ein pneumatisches Mikroventil der eingangs genannten Art gelöst, bei dem im Bereich der Ventilkammeranordnung mindestens eine Oberfläche mit einer Oberflächenbeschichtung vorhanden ist, die eine kleinere Oberflächenenergiedichte als in der Druckluft enthaltenes Öl aufweist, wobei der Antrieb elektrostatisch und/oder piezoelektrisch und/oder elektrodynamisch ist.

Die Oberflächenenergiedichte wird auch als "spezifische Oberflächenenergie" bezeichnet. Die Oberflächenenergiedichte, die teilweise auch vereinfacht nur als Oberflächenenergie bezeichnet wird, ist bei der Oberflächenbeschichtung kleiner als bei in der Druckluft enthaltenem Öl oder gegebenenfalls sonstigen Flüssigkeiten. Bei Flüssigkeiten, also auch bei Öl, spricht man anstelle von Oberflächenenergiedichte auch von Oberflächenspannung. Die Oberflächenspannung von Öl hängt von der Qualität des Öles ab und beträgt beispielsweise bei frischem Öl 40 mN/m bzw. 40 dynes/cm. Die Oberflächenspannung nimmt z.B. mit dem Alter des Öles ab und kann beispielsweise in den Bereich von etwa 25 bis 20 mN/m kommen. Die Oberflächenenergiedichte der erfindungsgemäßen Oberflächenbeschichtung hängt dementsprechend zweckmäßigerweise von der Qualität des in der Druckluft enthaltenen Öles ab und beträgt beispielsweise vorteilhaft 25 mN/m. Für andere Anwendungsfälle ist die Oberflächenenergiedichte der Oberflächenbeschichtung zweckmäßigerweise kleiner, zum Beispiel 20 mN/m oder vorzugsweise maximal 15 mN/m. Besonders vorteilhaft ist eine Oberflächenbeschichtung aus einer Fluorverbindung, beispielsweise einem Fluorpolymer, einem fluorchemisches Acrylatpolymer oder dergleichen, deren Oberflächenenergiedichte zweckmäßigerweise bei 10 bis 14 mN/m liegt.

Der Erfindung liegt der Gedanke zugrunde, eine oder mehrere Oberflächen in der Ventilkammeranordnung mit einer Beschichtung zu versehen, an der das Öl verhältnismäßig schlecht oder gar nicht anhaften kann. Das Öl kann die entsprechenden Oberflächen im Wesentlichen nicht mehr benetzen, sondern bildet Tropfen, die aus dem Mikroventil wieder ausgestoßen werden, beispielsweise wenn das Ventilglied betätigt wird. Das Mikroventil arbeitet zuverlässig. Unerwünschte Kapillareffekte, bei denen das Ventilglied an einer Oberfläche innerhalb der Ventilkammer anhaftet, treten nicht oder zumindest in wesentlich verringerter Form auf. Die Kräfte des Antriebs für das Ventilglied, beispielsweise eines elektrostatischen oder piezo-elektrischen Antriebs, reichen für eine zuverlässige Betätigung des Ventilglieds aus, da eine Betätigung des Ventilglieds behindernde oder sogar verhindernde Kapillarkräfte nicht oder in deutlich verringertem Maße wirken. Es versteht sich, dass die erfindungsgemäße Oberflächenbeschichtung im Bereich der Ventilkammeranordnung auch bei anderen in der Druckluft möglicherweise enthaltenen Stoffen vorteilhaft ist, beispielsweise wenn in der Druckluft Silikon, Wasser, organische oder synthetische Öle oder dergleichen enthalten sind.

Die erfindungsgemäße Oberflächenbeschichtung ist zweckmäßigerweise dünn. Ihre Dicke beträgt vorteilhafterweise nur wenige Nanometer.

Aufgrund der geringen Dicke der Oberflächenbeschichtung ist die Präzision des erfindungsgemäßen Mikroventils hoch. Die Toleranzen sind klein. Es versteht sich, dass verschiedene Oberflächen im Bereich der Ventilkammeranordnung auch mit unterschiedlichen Oberflächenbeschichtungen versehen sein können, das heißt mit Oberflächenbeschichtungen aus unterschiedlichen Materialien und/oder mit unterschiedlichen Oberflächenenergiedichten.

Weitere vorteilhafte Ausgestaltungen der Erfindung ergeben sich aus den abhängigen Ansprüchen und der Beschreibung.

Die Ventilkammeranordnung, die eine oder mehrere Ventilkammern enthält, kann insgesamt in ihrem Innern mit der Oberflächenbeschichtung versehen sein. Dasselbe gilt auch für das oder die Ventilglieder, die jeweils ganz oder teilweise mit der erfindungsgemäßen Oberflächenbeschichtung zweckmäßigerweise versehen sind.

Die Oberflächenbeschichtung wird beispielsweise im Rahmen eines CVD-Verfahrens, eines PVD-Verfahrens oder eines Plasmapolymerisationsverfahrens auf das Basismaterial des Mikroventils im Bereich der Ventilkammeranordnung aufgebracht (CVD = Chemical Vapor Deposition; PVD = Physical Vapor Deposition). Es versteht sich, dass unterschiedliche Oberflächen der Ventilkammeranordnung auch mit unterschiedlichen Verfahren herstellbar sind. Ferner ist auch ein Mehrschichtaufbau bei der erfindungsgemäßen Beschichtung möglich.

Eine andere Möglichkeit zur Oberflächenbeschichtung besteht darin, sie als Lösung aufzubringen, beispielsweise aufzusprühen. Zweckmäßigerweise verdampft das Lösungsmittel, zum Beispiel Hydrofluoräther, nach dem Aufbringen der Oberflächenbeschichtung ganz oder teilweise. Das Lösungsmittel ist, wenn das Mikroventil in Betrieb geht, zweckmäßigerweise im Wesentlichen verdampft.

Wie eingangs bereits erläutert, handelt es sich bei dem erfindungsgemäßen Mikroventil um eine vergleichsweise kleine Baugruppe, zweckmäßigerweise der Mikrosystemtechnik. Die Ventilgliedanordnung, das heißt eines oder mehrere Ventilglieder, haben beispielsweise einen Betätigungshub von maximal 20 µm, wobei z.B. aber auch Bauformen mit Betätigungshüben von 30 - 40 µm möglich sind. Zweckmäßigerweise ist der Betätigungshub aber noch kleiner, beispielsweise maximal 15 µm oder vorteilhafterweise maximal 10 µm. Die Ventilgliedanordnung dient zum Verschließen von einem oder mehreren Ventilkanälen, durch die Druckluft mittelbar in die Ventilkammer(n) einströmen und/oder aus dieser bzw. diesen ausströmen kann.

Das Basismaterial des erfindungsgemäßen Mikroventils ist vorteilhafterweise Silizium, beispielsweise SiO2. Es ist aber auch möglich, dass das Mikroventil ganz oder teilweise aus Kunststoff, Metall oder dergleichen besteht, zum Beispiel aus Nickel.

Bei dem Mikroventil hat sich ein Mehrschichtaufbau als zweckmäßig herausgestellt, wobei beispielsweise eine Öffnungsschicht mit einem oder mehreren Ventilkanälen, eine Deckschicht und eine oder mehrere zwischen der Öffnungsschicht und der Deckschicht angeordnete Steuerschichten vorhanden sein können, die die Ventilgliedanordnung, zum Beispiel in Gestalt blattartiger Ventilglieder, aufweisen oder bilden.

Die Oberflächenbeschichtung ist zweckmäßigerweise an Stellen vorhanden, bei denen die Spaltmaße zwischen Ventilgliedanordnung und Innenflächen der Ventilkammeranordnung klein sind. Vorteilhafterweise ist die Oberflächenbeschichtung an der Ventilgliedanordnung dort angeordnet, wo die ventilgliedanordnung mit den Innenflächen in Berührung kommt, zum Beispiel beim Verschließen der Ventilkanäle. Auch bei der Ventilkammeranordnung sind vorteilhafterweise diejenigen Innenflächen mit der Oberflächenbeschichtung versehen, die mit der ventilgliedanordnung in Kontakt kommen oder einen geringen Abstand zu dieser aufweisen. Beispielsweise sind vorteilhaft Oberflächen der Ventilkammeranordnung beschichtet, die einen Anschlag für die Ventilgliedanordnung bilden.

Besonders enge Spaltmaße treten beispielsweise auch in einem Anlenkbereich der Ventilgliedanordnung am Gehäuse des Mikroventils auf. Es hat sich als vorteilhaft herausgestellt, insbesondere diese Anlenkbereiche mit der erfindungsgemäßen Oberflächenbeschichtung zu versehen.

Vorteilhafterweise sind ein Ventilkanal oder mehrere Ventilkanäle mit der erfindungsgemäßen Oberflächenbeschichtung versehen. Auch ein den oder die Ventilkanäle umgebender Oberflächenbereich der Ventilkammeranordnung ist vorteilhafterweise mit der erfindungsgemäßen Oberflächenbeschichtung ausgestattet. Diese Maßnahmen erleichtern den Ausstoß von Öl oder sonstigen in der Druckluft enthaltenen Zusatzstoffen aus der Ventilkammeranordnung, sodass das Mikroventil nicht verstopft.

Nachfolgend werden Ausführungsbeispiele der Erfindung anhand der Zeichnung vorgestellt. Es zeigen:
- Fig. 1A, 1B: ein erstes Ausführungsbeispiel eines erfindungsgemäßen Mikroventils, das eine erfindungsgemäße Oberflächenbeschichtung im Bereich der Ventilkammer aufweist, wobei das Ventilglied des Mikroventils in Fig. 1A betätigt, in Fig. 1B unbetätigt ist, in einer Querschnittsansicht etwa entlang einer Linie I-I in Fig. 2,
- Fig. 2: eine perspektivische, schematische Ansicht des Mikroventils gemäß Fig. 1A, 1B von schräg unten,
- Fig. 3: eine Variante des Mikroventils gemäß Fig. 1B, das jedoch keine erfindungsgemäße Oberflächenbeschichtung aufweist,
- Fig. 4A, 4B: ein zweites Ausführungsbeispiel eines erfindungsgemäßen Mikroventils mit zwei Ventilkammern und zwei Ventilgliedern, die mit einer Oberflächenbeschichtung versehen sind, in unterschiedlichen Betätigungszuständen etwa in einer Querschnittsansicht gemäß Figuren 1A und 1B, und
- Fig. 5: eine Variante des Mikroventils gemäß Fig. 4B, jedoch ohne Oberflächenbeschichtung.

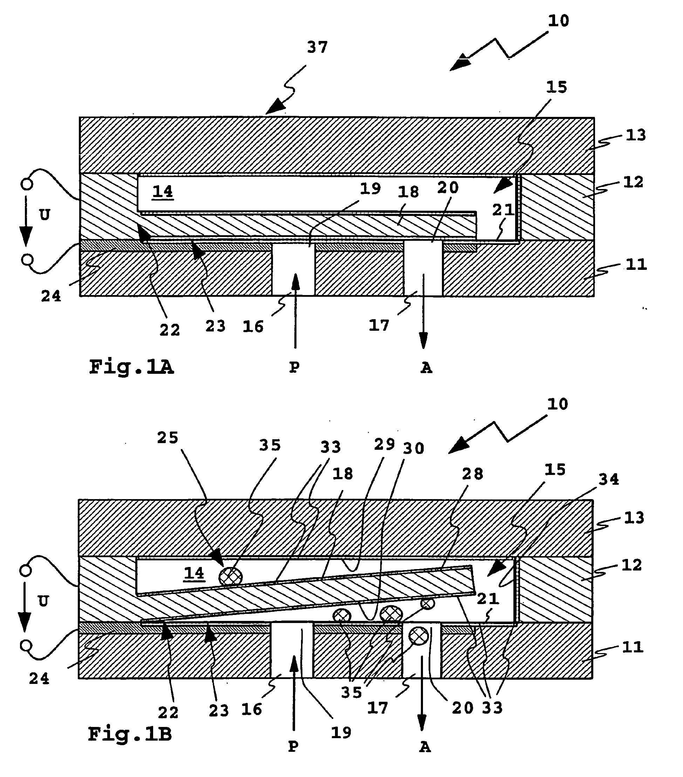

Das in den Fig. 1A und 1B dargestellte Mikroventil 10 ist in einem Mehrschichtaufbau realisiert, wobei die Schichten des Mikroventils 10 zweckmäßigerweise Siliziumschichten sind, die durch Isolationsschichten, beispielsweise Siliziumdioxid oder Siliziumnitrit, elektrisch voneinander isoliert sind. Somit ist es möglich, dass eine oder mehrere Schichten elektrostatische Aktoren oder mit den Aktoren zusammenwirkende elektrostatische Flächen bilden. Das Mikroventil 10 dient z.B. zur Betätigung eines nicht dargestellten pneumatischen Verbrauchers.

Der Mehrschichtaufbau des Mikroventils 10, einem 2/2-Ventil, ist folgendermaßen realisiert: Zwischen einer Öffnungsschicht 11 und einer Deckschicht 13 ist eine Steuerschicht 12 angeordnet. Die Schichten 11-13 bilden ein Gehäuse 37 und begrenzen eine Ventilkammer 14 einer Ventilkammeranordnung 15 im Innern des Mikroventils 10. Durch Ventilkanäle 16, 17 kann Druckluft in die Ventilkammer 14 einströmen bzw. ausströmen, wobei die Druckluftströme mit Pfeilen P und A bezeichnet sind. Mit Hilfe eines Ventilglieds 18, das durch die Steuerschicht 12 realisiert ist, sind die Ventilkanäle 16, 17 verschließbar.

In seiner Schließstellung verschließt das Ventilglied 18 Öffnungen 19, 20 der Ventilkanäle 16, 17 an der unteren Innenfläche der Ventilkammer 14. Das z.B. plattenartige Ventilglied 18 liegt auf der Innenfläche 21 in seiner Schließstellung auf. Die Innenfläche 21 bildet einen Anschlag für das Ventilglied 18. Man könnte das Ventilglied 18 auch als Klappe oder Membran bezeichnen.

In seiner Offenstellung ist das Ventilglied 18 von den Öffnungen 19, 20 abgehoben. Dabei ist das Ventilglied 18, das insgesamt biegbar und/oder um einen Anlenkbereich 23 schwenkbar ist, von den Öffnungen 19, 20 bzw. den Ventilkanälen 16, 17 weg ausgelenkt.

Das Ventilglied 18 wird beispielsweise durch Druckluft, die durch den Ventilkanal 16, z.B. den Speisekanal, in die Ventilkammer 14 einströmt, von den Öffnungen 19, 20 weg verschwenkt bzw. weggebogen, sodass die Druckluft in die Ventilkammer 14 einströmen kann. Dann ist ein Durchfluss von Druckluft vom Ventilkanal 16 über die Ventilkammer 14 zum Ventilkanal 17 möglich.

Das Mikroventil 10 bildet einen integralen Antrieb 23, vorliegend einen elektrostatischen Antrieb. Durch Betätigen des Antriebs 23 ist das Ventilglied 18 in die Schließstellung bringbar. Der Antrieb 23 ist durch das elektrisch leitfähige Ventilglied 18 bzw. die Steuerschicht 12 und ferner durch eine elektrisch leitfähige Leitschicht 24 an der Oberseite der Öffnungsschicht 11 bzw. der Unterseite der Ventilkammer 24 realisiert. Durch Anlegen einer Spannung U an die Steuerschicht 12 bzw. die Leitschicht 24 wird der Antrieb 23 betätigt, wobei das Ventilglied 18 in die die Öffnungen 19, 20 verschließende Schließstellung verschwenkt bzw. gebogen wird.

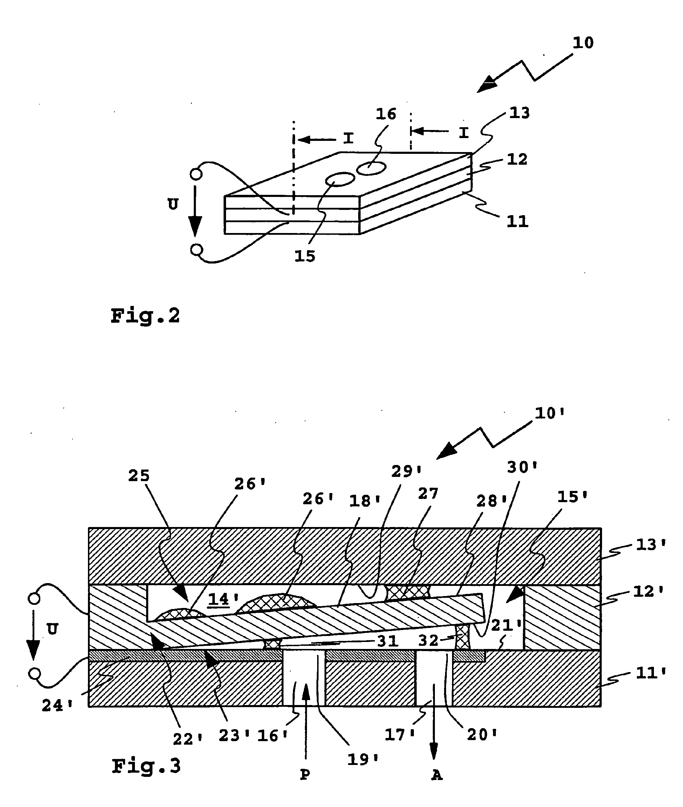

Allerdings sind in der Druckluft in der Praxis Verunreinigungen und/oder Additive enthalten, beispielsweise in Gestalt von Öl 25. Dieses Öl 25 führt bei einem Mikroventil 10' in konventioneller Bauart, das in Fig. 3 gezeigt ist, zu Störungen und/oder Fehlfunktionen.

Das Mikroventil 10' weist ähnliche Komponenten auf wie das Mikroventil 10, wobei die Komponenten des Mikroventils 10' zur besseren Unterscheidbarkeit jeweils mit einem zusätzlich angefügten ' versehen sind. Die Unterschiede zwischen den Komponenten des Mikroventils 10 und des Mikroventils 10' werden später noch näher erläutert. Die bislang beschriebenen Funktionen des Mikroventils 10 sind jedoch auch beim Mikroventil 10' realisiert.

Das in die Ventilkammer 14' eingebrachte Öl 25 weist beispielsweise eine Oberflächenspannung von etwa 20 bis 40 mN/m auf. Die Oberflächenenergiedichte der Oberflächen in der Ventilkammer 14', das heißt die entsprechenden Innenflächen der Schichten 11'-13' bzw. des Ventilglieds 18', sind größer als die Oberflächenspannung des Öls 25. Dies hat zur Folge, dass das Öl 25 die Oberflächen im Bereich der Ventilkammer 14' benetzt. Es bilden sich beispielsweise Linsen 26' an der Oberseite des Ventilglieds 18'. Bis auf die möglicherweise ungünstig wirkende Gewichtskraft der Linsen 26' auf das Ventilglied 18' beeinträchtigen die Linsen 26' die Funktionssicherheit des Mikroventils 10' noch verhältnismäßig wenig. Problematischer hingegen sind Kapillarkräfte, die durch eine Flüssigkeitssäule 27 hervorgerufen werden, die sich zwischen der Oberseite 28' des Ventilglieds 18' und der oberen Innenfläche 29' der Ventilkammer 14' erstreckt. Die Flüssigkeitssäule 27 aus Öl 25 zieht das Ventilglied 18' sozusagen zur oberen Innenfläche 29' hin. Die Antriebskraft des Antriebs 23 reicht dann nicht mehr aus, um das Ventilglied 18' in Schließstellung zu verlagern, bei der es die Ventilkanäle 16', 17' verschließt. Ferner bildet das Öl 25 weitere Flüssigkeitssäulen 31, 32, die sich zwischen der Unterseite 30' des Ventilglieds 18' und der unteren Innenfläche 21' der Ventilkammer 14' erstrecken. Zwar wird das Öl 25 der Flüssigkeitssäule 31, 32 bei einem Verschwenken des Ventilglieds 18' in Schließstellung zumindest teilweise aus dem Zwischenraum zwischen der Unterseite 30' und der unteren Innenfläche 21' verdrängt. Allerdings bleibt ein Rest des Öles 25, das sich netzend an den Oberflächen 30', 21' verteilt, in diesem Zwischenraum, sodass das Ventilglied 18' die Ventilkanäle 16', 17' nicht ausreichend dicht verschließt.

Um diese Probleme zu beseitigen, sind bei dem Mikroventil 10 im Unterschied zum Mikroventil 10' erfindungsgemäß Oberflächen mit Oberflächenbeschichtungen vorhanden, die eine kleinere Oberflächenenergiedichte aufweisen als das Öl 25, vorliegend beispielsweise eine Oberflächenenergiedichte von 10 bis 15 mN/m bzw. J/m². Die Oberflächenbeschichtungen enthalten beispielsweise Fluorverbindungen, zum Beispiel Fluorpolymere, oder dergleichen. Die Oberflächenbeschichtungen sind vorzugsweise durch chemisches und/oder physikalisches Dampfbeschichten erzeugt, wobei aber auch ein Plasmapolymerisationsverfahren möglich ist.

Beim Ausführungsbeispiel ist die Ventilkammer 14 im Wesentlichen, jedoch nicht vollständig mit einer erfindungsgemäßen Oberflächenbeschichtung 33 versehen. Beispielsweise sind die untere und obere Innenfläche 21, 29 der Ventilkammer 14 mit der Oberflächenbeschichtung 33, die eine niedrigere Oberflächenenergiedichte aufweist als das Öl 25, versehen. Ferner sind die Ober- und Unterseite 28, 30 des Ventilglieds 18 mit der Oberflächenbeschichtung 33 beschichtet.

Auch eine dem freien Ende des Ventilglieds 18 gegenüberliegende Seitenfläche 34 der Ventilkammer 14 ist mit der Oberflächenbeschichtung 33 versehen. Diese Maßnahme verhindert, dass sich zwischen dem freien Ende des Ventilglieds 18 und der Seitenfläche 34 eine Flüssigkeitssäule in der Art der Flüssigkeitssäulen 31, 32 ausbildet.

Das Öl 25 kann aufgrund der Oberflächenbeschichtung 33 die beschichteten Flächen der Ventilkammer 14 nicht benetzen, wie etwa beim Mikroventil 10', sondern bildet Öltropfen 35, die an der Oberflächenbeschichtung 33 sozusagen abperlen. Das Öl 25 kann zwischen den Komponenten im Bereich der Ventilkammer 14 keine oder zumindest keine nennenswerten Flüssigkeitssäulen ausbilden. Dadurch treten Kapillarkräfte, die unter Umständen die Antriebskraft des Antriebs 23 übersteigen, nicht oder zumindest nur in geringem Maße auf. Die Öltropfen 35 können durch die aus der Ventilkammer 14 ausströmende Druckluft aus der Ventilkammer 14 herausbefördert werden. Beispielsweise befindet sich in Fig. 1B ein Öltropfen 35 auf dem Weg nach außen durch den Ventilkanal 17 hindurch.

Es versteht sich, dass die Ventilkammer 14' auch vollständig mit der Oberflächenbeschichtung 33 versehen sein kann. Es ist aber auch möglich, dass die Oberflächenbeschichtung 33 einen geringeren Umfang aufweist als beim Ausführungsbeispiel gemäß Fig. 1A, 1B. Beispielsweise wäre es möglich, nur die Oberflächen des Ventilglieds 18, nicht aber die Innenflächen der Ventilkammer 14 mit der Oberflächenbeschichtung 33 zu versehen. Aber auch das Umgekehrte kann der Fall sein. Ferner ist eine Variante möglich, bei der im Wesentlichen der Anlenkbereich 22 mit der Oberflächenbeschichtung 33 versehen ist, beispielsweise Oberflächen, die sich zwischen dem Anlenkbereich 22 und dem Ventilkanal 16 erstrecken.

Ferner ist es möglich, beispielsweise auch die Innenflächen des Ventilkanals 16 und/oder des Ventilkanals 17 mit der Oberflächenbeschichtung zu versehen, sodass dort das Öl 25 nicht netzend anhaften kann.

Es versteht sich, dass sich die Vorteile des Beschichtungsverfahrens nicht nur bei elektrostatischen Antrieben zeigen, sondern auch bei Mikroventilen, die beispielsweise piezoelektrisch oder elektrodynamisch angetrieben sind.

Prinzipiell könnte eine erfindungsgemäß beschichtete Ventilgliedanordnung auch eine biegesteife Ventilplatte aufweisen, die beispielsweise durch Federmittel mit Bezug zum Ventilgehäuse beweglich aufgehängt ist.

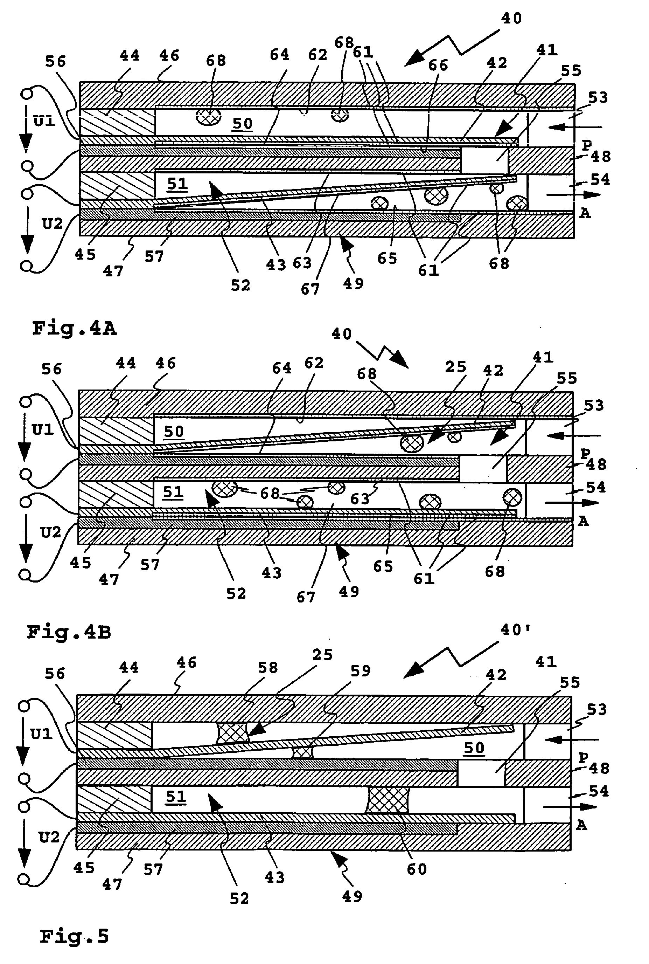

Bei einem nachfolgend anhand der Fig. 4A, 4B vorgestellten Mikroventil 40 hingegen weist eine Ventilgliedanordnung 41 biegbare, plattenartige Ventilglieder 42, 43 auf. Die Ventilglieder 42, 43 werden durch Steuerschichten 44, 45 gebildet, die zwischen einer oberen und einer unteren Deckschicht 46, 47 angeordnet sind. Zwischen den Steuerschichten 44, 45 befindet sich eine Öffnungsschicht 48. Die Schichten 44-48 bilden ein Gehäuse 49 des Mikroventils 40 und begrenzen Ventilkammern 50, 51 einer Ventilkammeranordnung 52.

Über seitliche Ventilkanäle 53, 54 kann Druckluft in die Ventilkammeranordnung 52 einströmen bzw. aus dieser herausströmen. Ein Ventilkanal 55 in der Öffnungsschicht 48 verbindet die obere mit der unteren Ventilkammer 50, 51.

Die elektrostatisch angetriebenen Ventilglieder 42, 43 dienen zum Öffnen bzw. Verschließen des Ventilkanals 55. Die Ventilglieder 42, 43 sind an der den Ventilkanälen 53; 54 entgegengesetzten Seite des Gehäuses 49 festgelegt. Die Ventilglieder 42, 43 sind biegbare und/oder schwenkbare Klappen bzw. Membranen. Die Ventilglieder 42, 43 sind elektrisch leitfähig.

Durch Anlegen einer Betätigungsspannung U1 an das Ventilglied 42 sowie an eine Leitschicht 56 an der Oberseite der Öffnungsschicht 58 kann das Ventilglied 42 betätigt werden, sodass insgesamt ein elektrostatischer Antrieb gebildet ist. In entsprechender Weise kann eine Betätigungsspannung U2 an das Ventilglied 43 sowie an eine Leitschicht 57 an der Oberseite der unteren Deckschicht 47 angelegt werden, um das Ventilglied 43 zu betätigen.

Durch entsprechendes Anlegen der Spannungen U1 und U2 sind die Ventilglieder 42, 43 in Schließstellung bringbar, bei der sie den Ventilkanal 55 verschließen. Dann ist ein Durchfluss von Druckluft durch die Ventilkammeranordnung 52 unterbrochen, das heißt ein Durchflussweg zwischen den Ventilkanälen 53, 54 über die Ventilkammeranordnung 52 ist verschlossen.

In der in Fig. 4B gezeigten Offenstellung der Ventilglieder 42, 43 ist dieser Durchflussweg offen, sodass Druckluft über den Ventilkanal 53 in die Ventilkammeranordnung 52 einströmen und über den Ventilkanal 55 und den Ventilkanal 53 aus dieser ausströmen kann, beispielsweise um einen nicht dargestellten pneumatischen Verbraucher zu betätigen.

Wie bereits im Zusammenhang mit dem vorangegangenen Beispiel erläutert, kann die Druckluft verunreinigt sein, beispielsweise mit Öl 25. Dies führt bei einem konventionellen Mikroventil zu den im Zusammenhang mit Fig. 3 beschriebenen Problemen. Auch zu dem Mikroventil 40 gemäß Fig. 4A, 4B ist eine konventionelle Variante in Gestalt eines Mikroventils 40' ohne Oberflächenbeschichtung in Fig. 5 dargestellt. Gleiche oder gleichartige Komponenten der Mikroventile 40, 40' sind mit denselben Bezugszeichen versehen und werden im Folgenden nicht näher erläutert.

Beispielsweise bildet sich zwischen einer Oberseite 58 des Ventilglieds 42 und der oberen Innenfläche 62 der Ventilkammer 50 eine Flüssigkeitssäule 58 aus. Die Flüssigkeitssäule 58 aus Öl 25 zieht das Ventilglied 42 sozusagen nach oben, zu der oberen Innenfläche 62 der Ventilkammer 50. Dadurch wird eine Verstellung des Ventilglieds 42 in Richtung der Schließstellung erschwert, wenn nicht gar verhindert. Ferner sind beispielhaft Flüssigkeitssäulen 59, 60 gezeigt, die sich zwischen der Unterseite 66 des Ventilglieds 42 und der unteren Innenfläche 64 der Ventilkammer 50 bzw. der Oberseite des Ventilglieds 43 und der oberen Innenfläche 63 der Ventilkammer 51 erstrecken. Beim Betätigen der Ventilglieder 42, 43 müssen diese Flüssigkeitssäulen 59, 60 verdrängt werden, was zusätzliche Antriebskräfte für den Antrieb der Ventilglieder 42, 43 erforderlich macht.

Um diese Probleme zu beseitigen, ist bei dem Mikroventil 40 eine Oberflächenbeschichtung 61 vorhanden, die eine kleinere Oberflächenenergiedichte aufweist als das Öl 25, also beispielsweise 12 bis 18 J/m². Die Oberflächenbeschichtung 61 ist im Bereich der Ventilkammeranordnung 52 an mehreren Flächen im Bereich der Ventilkammeranordnung 52 vorhanden, beispielsweise an den oberen Innenflächen 62, 63 und den unteren Innenflächen 64, 65 der Ventilkammern 50, 51. Die Oberflächenbeschichtung 61 an den Innenflächen 62 und 65 erstreckt sich bis in die Ventilkanäle 53, 54 hinein. Ferner sind die Unterseiten 66, 67 der Ventilglieder 42, 43 mit der Oberflächenbeschichtung 61 versehen. Die Oberflächenbeschichtung 61 verhindert Flüssigkeitssäulen in der Art der Flüssigkeitssäulen 58, 60 weitgehend. Stattdessen bilden sich an den mit der Oberflächenbeschichtung 61 versehenen Oberflächen Öltropfen 68, die, wie beispielsweise in Fig. 4B gezeigt, aus der Ventilkammeranordnung 52 ausgeblasen werden können.

## Patentansprüche

1. Pneumatisches Mikroventil mit einer Ventilkammeranordnung (15; 52) und mehreren Ventilkanälen (16, 17; 53-55), über die Druckluft in die Ventilkammeranordnung (15; 52) einströmen und ausströmen kann und von denen mindestens ein Ventilkanal (16, 17; 53-55) durch die Ventilgliedanordnung (18; 41) verschließbar ist, und mit einem Antrieb (23) für die Ventilgliedanordnung (18; 41), wobei der Antrieb (23) elektrostatisch und/oder piezoelektrisch und/oder elektrodynamisch ist, **dadurch gekennzeichnet, dass** im Bereich der Ventilkammeranordnung (15; 52) mindestens eine Oberfläche (28, 30, 21, 29) mit einer Oberflächenbeschichtung (33; 61) vorhanden ist, die eine kleinere Oberflächenenergiedichte als in der Druckluft enthaltenes Öl (25) aufweist.

2. Mikroventil nach Anspruch 1, **dadurch gekennzeichnet, dass** die Ventilgliedanordnung (18; 41) zumindest teilweise mit der Oberflächenbeschichtung (33; 61) versehen ist.

3. Mikroventil nach Anspruch 1 oder 2, **dadurch gekennzeichnet, dass** eine einem oder mehreren der Ventilkanäle (16, 17; 53-55) zugewandte Oberfläche (30) der Ventilgliedanordnung (18; 41) mit der Oberflächenbeschichtung (33; 61) versehen ist.

4. Mikroventil nach einem der vorhergehenden Ansprüche, **dadurch gekennzeichnet, dass** ein Anlenkbereich (22) der Ventilgliedanordnung (18; 41) an einem Gehäuse (37; 49) des Mikroventils mit der Oberflächenbeschichtung (33; 61) versehen ist.

5. Mikroventil nach einem der vorhergehenden Ansprüche, **dadurch gekennzeichnet, dass** eine Oberfläche der Ventilkammeranordnung (15; 52) mit der Oberflächenbeschichtung (33; 61) versehen ist, die einen Anschlag für die Ventilgliedanordnung (18; 41) bildet.

6. Mikroventil nach einem der vorhergehenden Ansprüche, **dadurch gekennzeichnet, dass** ein mindestens einen der Ventilkanäle (16, 17; 53-55) umgebender Oberflächenbereich (21) der Ventilkammeranordnung (15; 52) und/oder mindestens ein Ventilkanal (16, 17; 53-55) zumindest teilweise mit der Oberflächenbeschichtung (33; 61) versehen ist.

7. Mikroventil nach einem der vorhergehenden Ansprüche, **dadurch gekennzeichnet, dass** die Innenoberfläche der Ventilkammeranordnung (15; 52) ganz oder im Wesentlichen mit der Oberflächenbeschichtung (33; 61) versehen ist.

8. Mikroventil nach einem der vorhergehenden Ansprüche, **dadurch gekennzeichnet, dass** sein Basismaterial Silizium und/oder Kunststoff und/oder Metall ist.

9. Mikroventil nach einem der vorhergehenden Ansprüche, **dadurch gekennzeichnet, dass** die Oberflächenbeschichtung (33; 61) eine Oberflächenenergiedichte von maximal 25 mN/m aufweist.

10. Mikroventil nach einem der vorhergehenden Ansprüche,**dadurch gekennzeichnet, dass** die Oberflächenbeschichtung (33; 61) ganz oder teilweise im Rahmen eines chemischen und/oder physikalischen Dampf-Beschichtungsverfahrens und/oder eines Plasmapolymerisationsverfahrens hergestellt ist.

11. Mikroventil nach einem der vorhergehenden Ansprüche, **dadurch gekennzeichnet, dass** die Oberflächenbeschichtung (33; 61) als eine Lösung aufgesprüht ist.

12. Mikroventil nach einem der vorhergehenden Ansprüche, **dadurch gekennzeichnet, dass** die Oberflächenbeschichtung (33; 61) eine Fluorverbindung enthält.

13. Mikroventil nach einem der vorhergehenden Ansprüche, **dadurch gekennzeichnet, dass** die Ventilgliedanordnung (18; 41) einen Betätigungshub von maximal 20 µm aufweist.

14. Mikroventil nach einem der vorhergehenden Ansprüche, **dadurch gekennzeichnet, dass** es einen Mehrschichtaufbau mit insbesondere einer die mindestens zwei Ventilkanäle (16, 17; 53-55) enthaltenden Öffnungsschicht, einer Deckschicht und mindestens einer zwischen der Öffnungsschicht und der Deckschicht angeordneten, die Ventilgliedanordnung (18; 41) enthaltende Steuerschicht aufweist.

## Claims

1. Pneumatic microvalve with a valve chamber arrangement (15; 52) and several valve passages (16; 17; 53-55) through which compressed air is able to flow into and out of the valve chamber arrangement (15; 52), and of which at least one valve passage (16; 17; 53-55) may be closed by the valve element arrangement (18; 41), and with a drive (23) for the valve element arrangement (18; 41), wherein the drive (23) is electrostatic and/or piezoelectric and/or electrodynamic, **characterised in that** there is provided in the area of the valve chamber arrangement (15; 52) at least one surface (28, 30, 21, 29) with a surface coating (33; 61) with a lower surface energy density than oil (25) contained in the compressed air.

2. Microvalve according to claim 1, **characterised in that** the valve element arrangement (18; 41) is provided at least partly with the surface coating (33; 61).

3. Microvalve according to claim 1 or 2, **characterised in that** a surface (30) of the valve element arrangement (18; 41) facing one or more of the valve passages (16; 17; 53-55) is provided with the surface coating (33; 61).

4. Microvalve according to any of the preceding claims, **characterised in that** a hinge section (22) of the valve element arrangement (18; 41) on a casing (37; 49) of the microvalve is provided with the surface coating (33; 61).

5. Microvalve according to any of the preceding claims, **characterised in that** a surface of the valve chamber arrangement (15; 52) is provided with the surface coating (33; 61) and forms a stop for the valve element arrangement (18; 41).

6. Microvalve according to any of the preceding claims, **characterised in that** a surface area (21) of the valve chamber arrangement (15; 52) encompassing one or more of the valve passages (16; 17; 53-55) and/or one or more of the valve passages (16; 17; 53-55) is/are provided at least partly with the surface coating (33; 61).

7. Microvalve according to any of the preceding claims, **characterised in that** the inner surface of the valve chamber arrangement (15; 52) is provided wholly or in part with the surface coating (33; 61).

8. Microvalve according to any of the preceding claims, **characterised in that** its basic material is silicon and/or plastic and/or metal.

9. Microvalve according to any of the preceding claims, **characterised in that** the surface coating (33; 61) has a maximum surface energy density of 25 mN/m.

10. Microvalve according to any of the preceding claims, **characterised in that** the surface coating (33; 61) is produced wholly or partly in the course of a chemical and/or physical steam coating process and/or a plasma polymerisation process.

11. Microvalve according to any of the preceding claims, **characterised in that** the surface coating (33; 61) is sprayed on as a solution.

12. Microvalve according to any of the preceding claims, **characterised in that** the surface coating (33; 61) contains a fluoride compound.

13. Microvalve according to any of the preceding claims, **characterised in that** the valve element arrangement (18; 41) has a maximum operating stroke of 20 µm.

14. Microvalve according to any of the preceding claims, **characterised in that** it has a multilayer structure with in particular an opening layer containing at least two valve passages (16; 17; 53-55), a covering layer, and at least one control layer containing the valve element arrangement (18; 41) and arranged between the opening layer and the covering layer.

## Revendications

1. Micro-soupape pneumatique avec un ensemble de chambres de soupape (15 ; 52) et plusieurs conduits de soupape (16, 17 ; 53-55), par l'intermédiaire desquels l'air comprimé peut affluer dans l'ensemble de chambres de soupape (15 ; 52) et hors de celui-ci et parmi lesquels au moins un conduit de soupape (16, 17 ; 53-55) peut être fermé par un système d'obturateur de soupape (18 ; 41), et avec un système d'entraînement (23) pour le système d'obturateur de soupape (18; 41), ledit système d'entraînement (23) étant un système électrostatique et/ou piézoélectrique et/ou électrodynamique, **caractérisée en ce que** dans la zone de l'ensemble de chambres de soupape (15 ; 52) est prévue au moins une surface (28, 30, 21, 29) avec un revêtement de surface (33 ; 61), qui possède une densité d'énergie superficielle inférieure à celle de l'huile (25) contenue dans l'air comprimé.

2. Micro-soupape selon la revendication 1, **caractérisée en ce que** le système d'obturateur de soupape (18 ; 41) est muni au moins en partie du revêtement de surface (33 ; 61).

3. Micro-soupape selon la revendication 1 ou 2, **caractérisée en ce qu'**une surface (30) du système d'obturateur de soupape (18 ; 41), orientée vers un ou plusieurs des conduits de soupape (16, 17 ; 53-55), est munie du revêtement de surface (33 ; 61).

4. Micro-soupape selon l'une des revendications précédentes, **caractérisée en ce qu'**une zone d'articulation (22) du système d'obturateur de soupape (18 ; 41) à un boîtier (37 ; 49) de la micro-soupape est munie du revêtement de surface (33 ; 61).

5. Micro-soupape selon l'une des revendications précédentes, **caractérisée en ce qu'**une surface de l'ensemble de chambres de soupape (15 ; 52) est munie du revêtement de surface (33 ; 61), qui forme une butée pour le système d'obturateur de soupape (18 ; 41).

6. Micro-soupape selon l'une des revendications précédentes, **caractérisée en ce qu'**une zone de surface (21), entourant au moins un des conduits de soupape (16, 17 ; 53-55), de l'ensemble de chambres de soupape (15 ; 52) et/ou au moins un conduit de soupape (16, 17 ; 53-55) sont munis au moins en partie du revêtement de surface (33 ; 61).

7. Micro-soupape selon l'une des revendications précédentes, **caractérisée en ce que** la surface intérieure de l'ensemble de chambres de soupape (15 ; 52) est munie en totalité ou pour l'essentiel du revêtement de surface (33 ; 61).

8. Micro-soupape selon l'une des revendications précédentes, **caractérisée en ce que** son matériau de base est le silicium et/ou une matière plastique et/ou un métal.

9. Micro-soupape selon l'une des revendications précédentes, **caractérisée en ce que** le revêtement de surface (33 ; 61) possède une densité d'énergie superficielle égale au maximum à 25 mN/m.

10. Micro-soupape selon l'une des revendications précédentes, **caractérisée en ce que** le revêtement de surface (33 ; 61) est réalisé en totalité ou en partie dans le cadre d'un procédé de dépôt chimique en phase vapeur et/ou d'un procédé de dépôt physique en phase vapeur et/ou d'un procédé de polymérisation par plasma.

11. Micro-soupape selon l'une des revendications précédentes, **caractérisée en ce que** le revêtement de surface (33 ; 61) est pulvérisé sous la forme d'une solution.

12. Micro-soupape selon l'une des revendications précédentes, **caractérisée en ce que** le revêtement de surface (33 ; 61) contient une liaison fluorée.

13. Micro-soupape selon l'une des revendications précédentes, **caractérisée en ce que** le système d'obturateur de soupape (18 ; 41) possède une course d'actionnement de 20 µm au maximum.

14. Micro-soupape selon l'une des revendications précédentes, **caractérisée en ce qu'**elle comporte une structure multicouche avec, en particulier, une couche d'ouverture contenant au moins deux conduits de soupape (16, 17 ; 53-55), une couche de recouvrement et au moins une couche de commande contenant le système d'obturateur de soupape (18 ; 41) et disposée entre la couche d'ouverture et la couche de recouvrement.
